# EUROPÄISCHE PATENTSCHRIFT

(11) **EP 3 668 629 B1**
(45) Veröffentlichungstag und Bekanntmachung des Hinweises auf die Patenterteilung: **29.09.2021**
(21) Anmeldenummer: 18755802.8
(22) Anmeldetag: 15.08.2018
(51) Int. Cl.: B01D 35/153, B01D 35/16, B01D 27/08, B01D 27/10

(54) **FILTERSYSTEM, FILTER UND VERFAHREN**
FILTER SYSTEM, FILTER AND METHOD
SYSTÈME FILTRANT, FILTRE ET PROCÉDÉ

(30) Priorität: 15.08.2017 DE 102017007654; 15.08.2017 DE 102017007653
(43) Veröffentlichungstag der Anmeldung: 24.06.2020
(73) Patentinhaber: MANN+HUMMEL GmbH, 71636 Ludwigsburg (DE)
(72) Erfinder: LINHART, Jochen, 71409 Schwaikheim (DE); SRINIVAS, Mahesh, Bengaluru 560076 (IN)
(74) Vertreter: Mann + Hummel Intellectual Property
(86) Internationale Anmeldenummer: PCT/EP2018/072103
(87) Internationale Veröffentlichungsnummer: WO 2019/034682

(56) Entgegenhaltungen:
- EP-A1- 3 120 914
- WO-A1-2009/083285
- DE-U1-202009 002 455

## Beschreibung

### Technisches Gebiet

Die Erfindung betrifft ein Filtersystem für ein zu filterndes Flüssigmedium, insbesondere Kraftstoff oder Öl, insbesondere Schmieröl, insbesondere für den Verbrennungsmotor eines Kraftfahrzeugs. Das Filtersystem umfasst einen Filterkopf mit einem bodenseitigen Leerlaufkanal für das Fluid und mit einem Anschlagelement sowie einen Filter, der mittels einer um seine Längsachse gerichteten Einschraubbewegung am Filterkopf montierbar ist. Der Filter weist einenends einen Tragring auf, der am Filter relativ zur Längsachse rotierbar befestigt ist, wobei der Tragring ein exzentrisch angeordnetes Verschlusselement für den Leerlaufkanal und ein erstes Positioniermittel aufweist, das mittels der Einschraubbewegung gegen das Anschlagelement des Filterkopfs führbar ist, um den Tragring relativ zum Filterkopf in einer vorgegebenen Drehposition mit zum Leerlaufkanal axial fluchtend angeordnetem Verschlusselement zu positionieren, so dass das Verschlusselement durch eine aus der Einschraubbewegung abgeleitete Axialbewegung des Filters in seinen den Leerlaufkanal verschließenden Dichtsitz am Filterkopf überführbar ist.

### Stand der Technik

Ein eingangs genanntes Filtersystem ist beispielsweise aus der WO 2009/083285 A1 bekannt geworden. Bei dem bekannten Filtersystem ist der Filter als eine Wechselfilterkartusche mit einem integralen Gehäuseteil ausgeführt. Beim Demontieren des Filters vom Filterkopf wird der Tragring mit dem daran angeordneten Verschlusselement gegenüber dem Filterkopf entgegen der Einschraubbewegung des Filters zwangsläufig mitgedreht und - bedingt durch den gegenseitigen Gewindeeingriff der Wechselfilterkartusche und des Filterkopfs - in axialer Richtung sowie seitlich aus seinem Dichtsitz am Filterkopf gerissen. Dadurch kann es zu einer beträchtlichen Querbelastung des ggf. im Dichtsitz am Filterkopf festhaftenden Verschlusselements kommen. Dies kann schlimmstenfalls zu einem Abreißen von Teilen des Verschlusselements oder des gesamten Verschlusselements führen. Im Filterkopf verbleibende Bruchstücke können zu einer Funktionseinbuße des Fluidfilters bzw. einer Beschädigung von dem Filtersystem fluidisch nachgeordneten Aggregaten führen. Darüber hinaus kann das Verschlusselement bei dem bekannten Filtersystem nicht als ein in den Leerlaufkanal einführbarer Dichtstopfen ausgeführt werden, der sich durch ein besonders zuverlässiges Dichtvermögen auszeichnet.

Dokument DE 2020 09002455U offenbart eine Wechselfilterkartusche mit einem Verschlusselement für einen Leerlaufkanal. Dokument EP 3120914 A1 offenbart eine Filtereinrichtung mit einem austauschbaren Filterelement und einem Träger, wobei der Träger einen Pin zum einstecken in einen Leerlaufkanal aufweist.

Es ist deshalb die Aufgabe der Erfindung, ein eingangs genanntes Filtersystem und einen Filter für ein solches Filtersystem anzugeben, die bei unverändert einfacher Handhabung einen verbesserten Schutz des Verschlusselements gegenüber Beschädigungen bieten.

Die das Filtersystem betreffende Aufgabe wird durch ein Filtersystem mit den in Anspruch 1 angegebenen Merkmalen gelöst. Der erfindungsgemäße Filter weist die in Anspruch 10 angegebenen Merkmale auf und das erfindungsgemäße Verfahren weist die in Anspruch 14 angegebenen Merkmale auf.

### Offenbarung der Erfindung

Bei dem Filtersystem weist der Tragring des Filters erfindungsgemäß ein zweites Positioniermittel auf, durch das der Tragring bei einer der Einschraubbewegung entgegen gerichteten Ausschraubbewegung des Filters relativ zum Filterkopf zum Lösen des Verschlusselements aus seinem Dichtsitz am Filterkopf drehfixiert gehalten ist, so dass das Verschlusselement nur in axialer Richtung aus seinem Dichtsitz herausbewegbar ist. Durch das zweite Positioniermittel ist somit eine rotatorische Verstellung des Tragrings um die Längsachse des Filters bei einer der Einschraubbewegung entgegen gerichteten Ausschraubbewegung des Filters blockiert. Das zweite Positioniermittel kann sich dabei insbesondere an dem eingangs genannten Anschlagelement des Filterkopfs oder auch an einem von dem Anschlagelement beabstandet angeordneten Drehanschlag abstützen und dadurch (zunächst) ein unerwünschtes Mitdrehen des Tragrings mit dem Filter verhindern. Durch ein aus der Ausschraubbewegung abgeleitetes axiales Wegbewegen des Filters vom Filterkopf kann das Verschlusselement axial, insbesondere streng axial, aus seinem Dichtsitz herausbewegt und so eine übermäßige Querbelastung des Verschlusselements verhindert werden. Einem Abreißen von Teilen des Verschlusselements bzw. des gesamten Verschlusselements vom Tragring kann dadurch zuverlässig entgegengewirkt werden. Das zweite Positioniermittel bildet für den Tragring bzw. das daran angeordnete Verschlusselement solange einen Drehschutz, bis das Verschlusselement zuverlässig in axialer Richtung aus seinem Dichtsitz befreit und das zweite Positioniermittel in Umfangsrichtung des Tragrings aus seiner Überlappung mit einem dazu korrespondierenden Drehanschlag, insbesondere dem Anschlagelement, des Filterkopfs in axialer Richtung ausgerückt ist. Auch kann das Verschlusselement bei dem erfindungsgemäßen Filtersystem ohne Weiteres als ein Verschlussstopfen ausgebildet sein, der im Dichtsitz zumindest abschnittsweise in den Leerlaufkanal des Filterkopfs hineinragt und so ein besonders zuverlässiges Dichtvermögen bietet. Der Tragring kann konstruktiv einfach und kostengünstig einteilig ausgebildet sein. DerTragring kann auch mehrteilig, insbesondere in Segmenten, ausgebildet sein, um die Herstellung und Montage zu vereinfachen. Der Tragring weist in einer weiteren Ausführungsform eine in axialer Richtung über das Verschlussmittel und die beiden Positioniermittel hochgezogene Kontur auf, hierdurch kann konstruktiv einfach die Standsicherheit beim Transport zusätzlich optimiert werden; der Tragring kann hierzu einteilig oder mehrteilig, insbesondere in Segmenten, ausgebildet sein.

Die beiden Positioniermittel können nach der Erfindung so weit voneinander beabstandet am Tragring angeordnet sein, dass das Anschlagelement des Filterkopfs im Gleitspiel-Formschluss oder mit nur geringem Spiel zwischen den beiden Positioniermitteln einführbar ist. Dadurch kann eine besonders sichere Führung des Tragrings am Anschlagelement in axialer Richtung erreicht werden. Die beiden Positioniermittel sind nach der Erfindung stegförmig ausgeführt.

Das zweite Positioniermittel erstreckt sich nach der Erfindung von der Stirnseite des Filters in axialer Richtung vorzugsweise weniger weit weg, als das erste Positioniermittel. Das zweite Positioniermittel ist mit seinem von der Stirnseite des Filters wegweisenden freien axialen Ende somit gegenüber dem dazu korrespondierenden freien axialen Ende des ersten Positioniermittels in Richtung der Stirnseite axial zurückversetzt angeordnet. Beim Montieren des Filters am Filterkopf kann dadurch gewährleistet werden, dass zuerst das erste Positioniermittel am filterkopfseitig angeordneten Anschlagelement anschlägt und nicht etwa das zweite Positioniermittel. Eine weitere Einschraubbewegung des Filters bewirkt bei an dem Anschlagelement anliegendem ersten Positioniermittel sodann eine alleinige axiale Verstellung des Tragrings in Richtung auf den Leerlaufkanal. Das Anschlagelement kann dadurch zwischen den beiden Positioniermitteln eingreifen bzw. zwischen diesen geführt werden. Dadurch kann Montagefehlern vorgebeugt werden.

Nach einer alternativen Ausführungsform können sich die Positioniermittel auch vom Tragring in axialer Richtung gleich weit wegerstrecken. Mit anderen Worten können die freien Enden der beiden Anschlagelemente in axialer Richtung auch auf gleicher Höhe angeordnet sein. In diesem Fall sind die beiden Positioniermittel bevorzugt in radialer Richtung zueinander versetzt angeordnet, d. h. von der Längsachse des Filters unterschiedlich weit beabstandet. Das Anschlagmittel bildet in diesem Fall für die Positionierhilfen zwei Anschlagbereiche aus, die in axialer und in radialer Richtung zueinander versetzt angeordnet sind, so dass beim Montieren des (in Einschraubrichtung bewegten) Filters am Filterkopf immer nur bzw. zuerst das erste Positioniermittel am Anschlagelement anschlägt. Die beiden Positioniermittel können in einer weiteren Ausführungsform in einer im Wesentlichen gleichen radialen Position zwischen der äußeren und inneren Umfangskontur des Tragrings angeordnet sein, hierdurch wird konstruktiv einfach sichergestellt, dass nur der für den vorbestimmten Einsatz passende Filter verwendet wird.

Der Anschlag für die beiden Positioniermittel im Filterkopf kann vorzugsweise mit einer größeren axialen Erstreckung von der Stirnseite des Filterkopfs weg als die Oberkante des Ablaufkanals ausgebildet sein.

Erfindungsgemäß können die beiden Positioniermittel am Tragring stirnseitig und/oder umfangsseitig angeordnet sein. Sind die Positioniermittel umfangsseitig am Tragring angeformt, so kann dadurch vereinfacht eine mechanisch stabile Anbindung der Positioniermittel am Tragring erreicht werden.

Das Verschlusselement kann sich nach der Erfindung insbesondere in axialer Richtung von dem Tragring wegerstrecken.

Nach einer bevorzugten Ausführungsform der Erfindung ist das Verschlusselement als ein Verschlussstopfen ausgebildet, der zumindest abschnittsweise in axialer Richtung in den Leerlaufkanal eingeführt werden kann. Der Verschlussstopfen dient in diesem Fall zumindest teilweise als ein Radialdichtungselement. Das Verschlusselement kann zusätzlich oder alternativ der Form des Ablaufkanals angepasst sein. In einer Ausführungsform kann das Verschlusselement beispielsweise nierenförmig ausgebildet sein. Nierenförmig bedeutet hierbei, dass das Verschlusselement in der Grundfläche im Wesentlichen rund oder elliptisch ist und eine Vertiefung oder Einbuchtung in der Außenkontur aufweist, so dass sich das Vorzeichen der Krümmungsrichtung der Außenkontur mindestens einmal ändert, wobei die Vertiefung oder Einbuchtung die Grundfläche in zwei, insbesondere im Wesentlichen abgerundete, Bereiche aufteilt. Die Aufteilung kann hierbei symmetrisch oder auch asymmetrisch sein, so dass zwei in der Fläche gleich große Bereiche entstehen oder der erste Bereich eine größere Fläche aufweist als der zweite Bereich. Diese Ausführungsform hat den Vorteil, dass die Positionierungsgenauigkeit konstruktiv einfach sichergestellt werden kann, mit anderen Worten trifft das Dichtmittel konstruktiv einfach sichergestellt den Dichtsitz und deckt diesen sicher ab.

Das Verschlusselement kann zwecks eines besonders zuverlässigen Dichtvermögens mit einem elastomeren Radial- und/oder einem Axialdichtungselement versehen sein bzw. als ein solches elastomeres Radial- und/oder Axialdichtungselement ausgebildet sein. Dadurch kann eine zuverlässige fluiddichte Abdichtung des Leerlaufkanals gewährleistet werden. Das Verschlusselement kann erfindungsgemäß zusätzlich eine, vorzugsweise als Ringnut, ausgeführte Dichtungshaltestruktur für das vorgenannte Radial- bzw. Axialdichtungselement aufweisen. Dadurch erübrigt sich ein zusätzliches Festkleben bzw. Anschäumen des Dichtungselements am Verschlusselement.

Das Verschlusselement kann in weiteren Ausführungsformen zu dem ersten und/oder zu dem zweiten Positioniermittel benachbart angeordnet sein. Die Positioniermittel können beispielsweise auf den Tragring (360°, erster Quadrant α = 0 - 90°; zweiter Quadrant α = 90 - 180°; dritter Quadrant α = 180 - 270°; vierter Quadrant α = 270 - 360°) bezogen in einem Bogenwinkel α zum Verschlusselement beabstandet angeordnet sein und beispielsweise auf den Tragring bezogen können die Positioniermittel dem Verschlusselement gegenüberliegend angeordnet sein. Benachbart im Sinne der Erfindung bedeutet hierbei, dass das Verschlusselement und das erste sowie das zweite Positioniermittel bevorzugt in zwei benachbarten Quadranten des Tragrings, besonders bevorzugt in einem Quadrant des Tragrings, angeordnet sind. Für den Fall, dass das Verschlusselement und die Positioniermittel in zwei benachbarten Quadranten des Tragrings angeordnet sind, kann das Verschlusselement in einem ersten Quadrant des Tragrings angeordnet sein und die Positioniermittel können in einem zweiten Quadrant des Tragrings angeordnet sein. Alternativ können auch das Verschlusselement und das erste oder das zweite Positioniermittel in dem ersten Quadrant des Tragrings angeordnet sein und das jeweils andere Positioniermittel in einem hierzu benachbarten zweiten Quadranten angeordnet sein. Gegenüberliegend bedeutet im Sinne der Erfindung, dass das Verschlusselement auf einem ersten Halbkreissegment des Tragrings angeordnet ist und das erste und das zweite Positioniermittel auf dem zweiten Halbkreissegment des Tragrings angeordnet sind, wobei die Mitte des Verschlusselements und die Mitte des Abstands zwischen den beiden Positioniermitteln bevorzugt den jeweiligen Bezugspunkt bilden und wobei diese Bezugspunkte bevorzugt einander gegenüberliegend angeordnet sind.

Für eine besonders einfache und störungsarme Montage des Filtersystems kann das zweite Positioniermittel des Tragrings erfindungsgemäß eine stirnseitige Auflaufschräge für das Anschlagelement aufweisen. Dadurch kann bei der Montage des Filters am Filterkopf einem unerwünschten Verkanten des zweiten Positioniermittels an dem Anschlagelement entgegengewirkt werden.

Unter fertigungstechnischen Aspekten sind die beiden Positioniermittel vorzugsweise an dem Tragring angeformt. Der Tragring kann dadurch besonders kostengünstig und mit geringen Fertigungstoleranzen im Wege eines Kunststoff-Spritzgussverfahrens erzeugt werden. Dies ist insbesondere bei der Massenfertigung des Filters von Vorteil.

Der Filter ist erfindungsgemäß als eine Wechselfilterkartusche ausgebildet. Eine Wechselfilterkartusche, auch als Wechselfilter bezeichnet, im Sinne der Anmeldung ist eine nicht zerstörungsfrei offenbare Filterkartusche, diese umfasst ein Gehäuse mit einem Deckel, wobei das Gehäuse insbesondere aus Metall oder Kunststoff ist. In dem Gehäuse ist ein Filterelement angeordnet, insbesondere ein ringförmiges Filterelement. Das Gehäuse weist bevorzugt einen Deckelabschnitt mit einem Einlass, einem Auslass und einem auf dem Deckelabschnitt angeordneten Dichtungssitz auf. Der Auslass ist bevorzugt zentrisch in einem ersten Deckelabschnitt vorgesehen, der Dichtungssitz ist bevorzugt konzentrisch zu dem Auslass auf einem zweiten Deckelabschnitt angeordnet und der im Deckel, insbesondere im zweiten Deckelabschnitt, angeordnete Einlass befindet sich vorzugsweise zwischen dem Auslass und dem Dichtungssitz. Der Auslass umfasst vorzugsweise ein Gewinde.

Das den Deckel bildende Gehäuseteil des Filters umfasst in einer weiteren Ausführungsform einen ersten innenliegend angeordneten Deckelabschnitt mit einer zentralen Strömungsöffnung und einen zweiten außenliegend angeordneten Deckelabschnitt. Der zweite außenliegende Deckelabschnitt ist hier mit dem topfförmigen Gehäuseabschnitt des Gehäuseteils fluiddicht verbunden, beispielsweise verbördelt oder verschweißt. Der erste Deckelabschnitt des Gehäuseteils weist bevorzugt ein (Innen-)Gewinde auf, über das der erfindungsgemäße Filter in ein (Außen-)Gewinde eines Anschlussstutzens des Filterkopfs einschraubbar ist. Am Gehäuseteil kann in einer weiteren Ausführungsform stirnseitig ein umlaufender Dichtungsring angeordnet sein. Der Dichtungsring kann zusätzlich eine Dichtlippe zur umlaufend dichtenden Anlage am Filterkopf aufweisen. In weiteren Ausführungsformen kann ein Dichtungshaltering für den Dichtungsring vorgesehen sein, wobei der Dichtungshaltering einen Teil des zweiten Deckelabschnitts bildet. Der Dichtungshaltering ist in einer bevorzugten Ausführungsform formschlüssig mit dem Gehäuseteil des Filters verbunden, insbesondere gebördelt oder verschweißt.

Die erfindungsgemäße Wechselfilterkartusche ist mittels einer um ihre Längsachse gerichtete Einschraubbewegung am Filterkopf montierbar, wobei die Wechselfilterkartusche einenends einen Tragring aufweist, der am insbesondere topfförmigen Gehäuseteil der Wechselfilterkartusche relativ zur Längsachse der Wechselfilterkartusche rotierbar befestigt ist, wobei der Tragring ein exzentrisch angeordnetes Verschlusselement für den Leerlaufkanal und ein erstes stegförmiges Positioniermittel aufweist, das mittels der Einschraubbewegung gegen das Anschlagelement des Filterkopfs führbar ist, um den Tragring relativ zum Filterkopf in einer vorgegebenen Drehposition mit zum Leerlaufkanal axial fluchtend angeordnetem Verschlusselement zu positionieren, so dass das Verschlusselement durch eine aus der Einschraubbewegung abgeleitete Axialbewegung des Filters in seinen den Leerlaufkanal verschließenden Dichtsitz am Filterkopf überführbar ist, wobei der Tragring ein zweites stegförmiges Positioniermittel aufweist, durch das der Tragring bei einer der Einschraubbewegung entgegengerichteten Ausschraubbewegung des Filters zum Lösen des Verschlusselements aus seinem Dichtsitz am Filterkopf durch Anlage am Anschlagelement (64) drehfixiert gehalten werden kann, so dass das Verschlusselement allein in axialer Richtung aus seinem Dichtsitz herausbewegbar ist. Das zweite Positioniermittel ist am Tragring derart ausgebildet, dass der Tragring durch Anlage des zweiten Positioniermittels am Anschlagelement relativ zum Filterkopf drehfixiert gehalten werden kann.

In einer weiteren Ausführungsform des Filters erstreckt sich zumindest eines der beiden Positioniermittel, bevorzugt beide Positioniermittel, in einer radialen Richtung vom Tragring weg. Die beiden Positioniermittel sind besonders bevorzugt entweder innerhalb des Tragringumfangs oder außerhalb des Tragringumfangs angeordnet. Das erste und/oder das zweite Positioniermittel erstreckt sich in einer weiteren Ausführungsform in axialer Richtung über das Verschlusselement hinaus von der Stirnseite des Filters weg, wobei das erste Positioniermittel sich weiter erstreckt als das zweite Positioniermittel.

In einer bevorzugten Ausführungsform ist rohseitig zusätzlich eine Rücklaufsperrmembran im Gehäuse des Filters vorgesehen, welche in der Einbausituation auf der Rohseite des Filters angeordnet ist und ein Rückströmen des Flüssigmediums, beispielsweise eines Öls, verhindert.

Weitere Merkmale des erfindungsgemäßen Filters sind oben im Rahmen der Beschreibung des erfindungsgemäßen Filtersystems beschrieben.

Derartige Wechselfilterkartuschen weisen somit ein integrales Gehäuseteil auf, in dem ein Filterelement angeordnet ist. Die Wechselfilterkartuschen sind besonders einfach und bequem zu handhaben und werden zumeist im sogenannten Hauptstrom eingesetzt, bei dem der gesamte Fluidstrom den Filter durchströmt. Der Tragring kann in diesem Fall insbesondere an einem Deckelabschnitt des Gehäuseteils der Wechselfilterkartusche rotierbar befestigt sein. Unter konstruktiven wie auch fertigungstechnischen Gesichtspunkten ist der Tragring vorzugsweise mit dem Filter, insbesondere dessen Deckelabschnitt, verhakt, also mittels eines Hinterschnitts gehalten bzw. verbunden.

Nach einer alternativen Ausführungsform kann der Filter auch als ein in einem Filtergehäuse austauschbar anzuordnender Filtereinsatz ausgeführt sein. Dies ermöglicht einen besonders kostengünstigen Austausch des Filters. Das Filtersystem weist in diesem Falle ein Filtergehäuse mit dem Filterkopf und einem als Gehäusedeckel ausgeführten Gehäuseteil auf, das in das Gewinde des Filterkopfs einschraubbar ist. Der Filterkopf ist vorzugsweise topfartig bzw. als ein mit dem Gehäusedeckel verschließbarer Gehäusetopf ausgeführt, der der Aufnahme des Filters dient. Bei dieser Bauart ist der Filter an dem als Gehäusedeckel ausgebildeten Gehäuseteil vorteilhaft drehfest und in axialer Richtung lagefixiert gehalten. Dies kann beispielsweise dadurch erreicht werden, dass der Filter mit dem Gehäusedeckel verrastet ist. Alternativ kann der Filter auch im Reibschluss am Gehäuseteil gehalten angeordnet sein. Insgesamt kann dadurch beim Einschrauben des Gehäusedeckels in das Gewinde des Filterkopfs und auch beim Abschrauben des Gehäusedeckels vom Filterkopf ein Mitdrehen des Filters gewährleistet werden.

Ist der Filter als ein herkömmlicher Filtereinsatz für ein öffenbares Filtergehäuse mit dem Filterkopf und einem Gehäusedeckel ausgebildet, so kann der Tragring nach der Erfindung an einer Endscheibe oder einem Stützrohr des Filters angeordnet, insbesondere verrastet sein, um eine einfache und kostengünstige Fertigung des Filters zu ermöglichen.

Der erfindungsgemäße Filter für ein vorstehend erläutertes Filtersystem ist erfindungsgemäß als eine Wechselfilterkartusche ausgeführt. Der Filter zeichnet sich durch eine besonders einfache und sichere Handhabung aus.

Das erfindungsgemäße Verfahren zum Einsetzen oder Wechseln eines Filters eines erfindungsgemäßen Filtersystems umfasst die Schritte:
Aufsetzen einer Wechselfilterkartusche, umfassend ein in einem Gehäuse der Wechselfilterkartusche angeordnetes Filterelement auf einen Filterkopf,
Montieren der Wechselfilterkartusche mittels einer um eine Längsachse gerichteten Einschraubbewegung am Filterkopf, wobei der Filter einenends einen Tragring aufweist, der am Gehäuseteil der Wechselfilterkartusche relativ zur Längsachse der Wechselfilterkartusche rotierbar befestigt ist, wobei der Tragring ein exzentrisch angeordnetes Verschlusselement für den Leerlaufkanal und ein erstes stegförmiges Positioniermittel aufweist, das mittels der Einschraubbewegung gegen das Anschlagelement des Filterkopfs führbar ist, Positionierung des Tragrings relativ zum Filterkopf in einer vorgegebenen Drehposition mit zum Leerlaufkanal axial fluchtend angeordnetem Verschlusselement,
Überführen des Verschlusselements durch eine aus der Einschraubbewegung abgeleitete Axialbewegung der Wechselfilterkartusche in ihren den Leerlaufkanal verschließenden Dichtsitz am Filterkopf, wobei der Tragring ein zweites stegförmiges Positioniermittel aufweist, durch das der Tragring bei einer der Einschraubbewegung entgegengerichteten Ausschraubbewegung des Filters zum Lösen des Verschlusselements aus seinem Dichtsitz am Filterkopf am Anschlagelement (64) anliegend drehfixiert gehalten ist, so dass das Verschlusselement allein in axialer Richtung aus seinem Dichtsitz herausbewegbar ist.

Ein Wechseln des erfindungsgemäßen Filters kann zusätzlich als vorgelagerten Schritt das Lösen und Entfernen eines auszutauschenden Filters durch eine der Einschraubbewegung entgegengerichtete Ausschraubbewegung umfassen, wobei der Tragring während des Lösens des Verschlusselements aus seinem Dichtungssitz am Filterkopf drehfixiert gehalten ist, so dass das Verschlusselement allein in axialer Richtung aus dem Dichtsitz herausbewegbar ist.

Nachstehend wird die Erfindung anhand zweier in der Zeichnung wiedergegebener Ausführungsbeispiele näher erläutert.

### Kurze Beschreibung der Zeichnungen

In der Zeichnung zeigen
- Fig. 1: einen als Wechselfilterkartusche ausgeführten Filter mit einem stirnseitig angeordneten Tragring mit einem Verschlusselement sowie zwei Positioniermitteln, in einer perspektivischen Ansicht;
- Fig. 2: ein Filtersystem mit einem Filter gemäß Fig. 1 und mit einem Filterkopf, der einen durch das Verschlusselement des Filters zu verschließenden Leerlaufkanal aufweist, während der Montage des Filters am Filterkopf, in einer Schnittdarstellung;
- Fig. 3: das Filtersystem gemäß Fig. 2 zu einem späteren Montagezeitpunkt;
- Fig. 4: das Filtersystem gemäß Fig. 2 zu einem gegenüber Fig. 3 nochmals späteren Montagezeitpunkt;
- Fig. 5: ein weiteres Filtersystem mit einem in seiner vorgegebenen Montageposition am Filterkopf angeordneten Filter;
- Fig. 6: das Filtersystem gemäß Fig. 5 beim Abschrauben des Filters vom Filterkopf, wobei das zweite Positioniermittel an einem Anschlagelement des Filterkopfs anliegt und so ein Mitdrehen des Tragrings mit Filter entgegen der Einschraubrichtung verhindert; und
- Fig. 7: das Filtersystem aus Fig. 5 zu einem Demontagezeitpunkt, bei dem das filterkopffest angeordnete Anschlagelement und die Positioniermittel des Tragrings des Filters außer Eingriff gebracht sind.

### Ausführungsform(en) der Erfindung

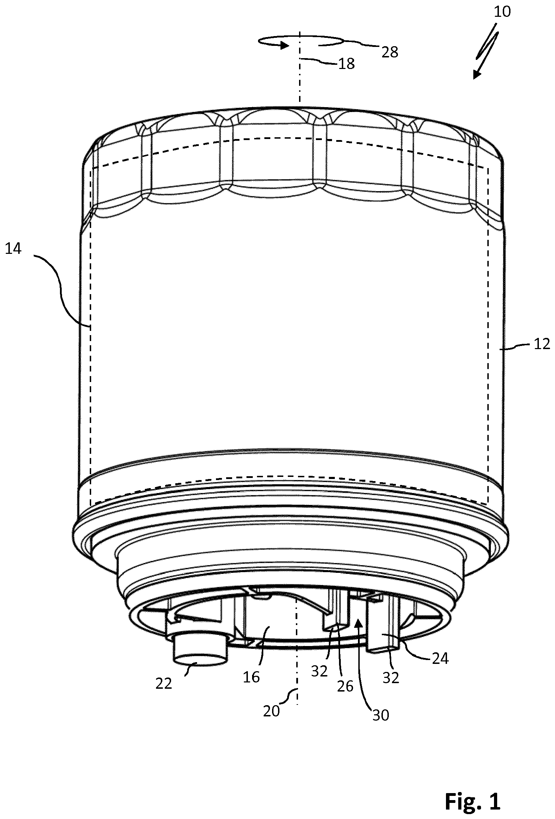

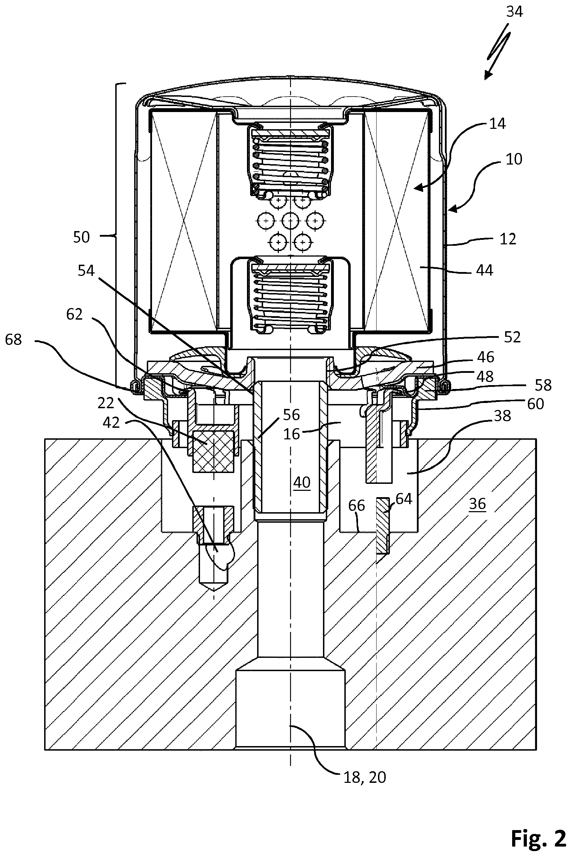

In **Fig. 1** ist ein als Wechselfilterkartusche ausgebildeter Filter **10** zum Filtern eines Fluids, hier beispielsweise Schmieröl für einen Verbrennungsmotor, gezeigt. Der Filter 10 umfasst hier ein Gehäuseteil **12,** welches einen Deckel umfasst, mit einem in dem Gehäuse 12 angeordneten Filterelement **14,** das in Fig. 1 stark schematisiert mit gestrichelter Linie dargestellt ist. Am Filter 10 ist einenends ein Tragring **16** angeordnet. Der Tragring 16 umgreift die Längsachse **18** des Filters bzw. die damit zusammenfallende Filterelementlängsachse **20** des Filterelements 14 ringförmig. Der Tragring 16 ist um die Längsachse 18 rotierbar, d. h. frei drehbar, am Gehäuseteil 12 des Filters 10 gelagert und kann beispielsweise als ein Kunststoff-Spritzgussteil ausgeführt sein. Am Tragring 16 ist ein Verschlusselement **22** angeordnet. Das Verschlusselement 22 erstreckt sich vom Tragring 16 in einer axialen Richtung weg. Das Verschlusselement 22 kann insbesondere aus einem gummielastisch verformbaren Material, d. h. einem Elastomer, bestehen. Am Tragring 16 sind ferner ein erstes und ein zweites Positioniermittel **24, 26** angeordnet. Die beiden Positioniermittel 24, 26 sind am Tragring 16 bevorzugt angeformt. Beide Positioniermittel 24, 26 erstrecken sich vom Tragring 16 stirnseitig in axialer Richtung weg. Die beiden Positioniermittel 24, 26 sind zueinander parallel verlaufend ausgerichtet und in Umfangsrichtung des Tragrings 16 voneinander beabstandet angeordnet. Zu beachten ist, dass das zweite Positioniermittel 26 in Richtung einer mit **28** bezeichneten Auf- bzw. Einschraubbewegung des Filters 10 auf einen Anschlussstutzen eines in Fig. 2 näher gezeigten Filterkopfs vor dem ersten Positioniermittel 24 angeordnet ist. Zwischen den beiden Positioniermitteln 24, 26 ist dadurch eine Lücke oder Aufnahme **30** ausgebildet. Das erste Positioniermittel 24 überragt hier das zweite Positioniermittel 26 in axialer Richtung. Mit anderen Worten ist das zweite Positioniermittel 26 mit seinem freien axialen Ende **32** von einer Stirnseite des Filters 10 weniger weit beabstandet, als das freie axiale Ende 32 des ersten Positioniermittels 24.

In **Fig.** 2 ist ein Filtersystem **34** zum Filtern eines Fluids, insbesondere von Kraftstoff oder Öl, insbesondere Schmieröl für den Verbrennungsmotor eines Kraftfahrzeugs (nicht gezeigt), gezeigt. Das Filtersystem 34 umfasst einen Filter 10 gemäß Fig. 1 und einen Filterkopf **36,** an dem der Filter 10 mit dem darin angeordneten Filterelement 14 montiert werden soll.

Der Filterkopf 36 ist in Fig. 2 stark schematisiert dargestellt und weist einen nur teilweise wiedergegebenen rohseitigen Einlasskanal **38** für das zu filternde Fluid und einen reinseitig angeordneten Auslasskanal **40** für das gefilterte Fluid auf. Ein mit **42** bezeichneter bodenseitiger Leerlaufkanal des Filterkopfs 36 dient dazu, im Filter 10 enthaltenes Fluid bei einem Austausch des Filters 10 zu entleeren und - der Schwerkraft folgend - über den Filterkopf 36 kontrolliert abzuleiten. Dadurch kann ein unerwünschter Austrag von Kraftstoff oder Öl in die Umgebung des Filtersystems 34 verhindert werden. Auch wird das umweltgerechte Entsorgen des Filters 10 dadurch insgesamt vereinfacht. Der Leerlaufkanal 42 kann beispielsweise mit einer Ölwanne oder einem Kraftstofftank (nicht gezeigt) fluidisch verbunden sein. Im betriebsbereiten Zustand des Filtersystems 30 ist der Leerlaufkanal 42 durch das am Tragring 16 befestigte Verschlusselement 22 der Wechselfilterkartusche fluiddicht verschlossen. Dadurch kann das Fluid im Filterbetrieb durch den Filter 10 gepumpt und zugleich ein unerwünschtes Abströmen des Fluids über den Leerlaufkanal 42 verhindert werden.

Wie aus der Schnittdarstellung des Filtersystems 34 in Fig. 2 hervorgeht, weist das Filterelement 14 ein Filtermedium **44** auf, das die Filterelementlängsachse 20 ringförmig umgreift. Das Filterelement 14 ist mithin als ein sogenanntes Rundfilterelement ausgebildet. Das Filtermedium 44 kann zum Erhalt einer möglichst großen funktionellen Filterfläche sternförmig gefaltet sein. Das Filtermedium 44 kann zwischen zwei Endscheiben des Filterelements 14 gehalten angeordnet sein. Andere Bauformen des Filterelements 14 sind ohne Weiteres vorstellbar.

Das Gehäuseteil 12 des Filters 10 umfasst einen Deckel mit einem ersten, innenliegend angeordneten Deckelabschnitt **46** mit einer zentralen Strömungsöffnung und einen zweiten, außenliegend angeordneten Deckelabschnitt **48.** Der zweite außenliegende Deckelabschnitt 48 ist hier mit dem topfförmigen Gehäuseabschnitt **50** des Gehäuseteils 12 fluiddicht verbunden, beispielsweise verbördelt oder verschweißt. Der erste Deckelabschnitt 46 des Gehäuseteils 12 weist ein (Innen-)Gewinde **52** auf, über das der Filter 10 in ein (Außen-)Gewinde **54** eines Anschlussstutzens **56** des Filterkopfs 36 einschraubbar ist. Am Gehäuseteil 12 ist stirnseitig ein umlaufender Dichtungsring **58** angeordnet. Der Dichtungsring 58 kann gemäß Fig. 2 eine Dichtlippe **60** zur umlaufend dichtenden Anlage am Filterkopf 36 aufweisen. Der zweite Deckelabschnitt 48 kann in Ausführungsformen insbesondere einen Dichtungshaltering **68** für den Dichtungsring 58 aufweisen. Der Dichtungshaltering 68 ist in einer bevorzugten Ausführungsform formschlüssig mit dem Gehäuseteil 12 des Filters verbunden, insbesondere gebördelt oder verschweißt.

Der Tragring 16 kann zwecks einer einfachen und kostengünstigen Montage mit dem Gehäuseteil 12 verhakt sein. Der Tragring 16 weist in diesem Fall filterelementseitig ein oder mehrere Hakenelemente **62** auf. Die Hakenelemente 62 hintergreifen hier beispielhaft den zweiten Deckelabschnitt 48. Eine andersgeartete rotierbare Befestigung des Tragrings 16 am Gehäuseteil 12 der Wechselfilterkartusche 10 ist vorstellbar.

Der Filterkopf 36 weist ein bodenseitig angeordnetes Anschlagelement **64** auf, das für den Tragring 16 als ein Drehanschlag dient. Das Anschlagelement 64 kann sich gemäß Fig. 2 insbesondere vom Bodenabschnitt **66** des Filterkopfs 36 in einer axialen Richtung wegerstrecken. Der Filterkopf 36 kann aus Metall, beispielsweise Aluminium, bestehen. Das Anschlagelement 64 kann dem Filterkopf 36 angeformt sein oder aber als ein vom Filterkopf 36 separates Bauteil ausgeführt sein. Das Anschlagelement 64 kann im letztgenannten Fall insbesondere aus Kunststoff bestehen.

Beim Einschrauben des Filters 10 in das Außengewinde 54 des Filterkopfs 36 wird der Tragring 16 zunächst gemeinsam mit dem Filter 10 in Einschraubrichtung 28 mitbewegt. Aus dem gegenseitigen Gewindeeingriff des Filters 10 und des Filterkopfs 36 resultiert dabei eine Vorschubbewegung des Filters 10 axial in Richtung des Leerlaufkanals 42 bzw. des Anschlagelements 64 des Filterkopfs 36. In dem in Fig. 2 gezeigten Montagezustand des Filters am Filterkopf 36 sind die beiden Positioniermittel 24, 26 des Tragrings 16 von dem Anschlagelement 64 noch axial beabstandet angeordnet. Das Anschlagelement 64 erstreckt sich mit anderen Worten noch nicht in eine Rotationsbahn (nicht gezeigt) des ersten Positioniermittels 24 bzw. des zweiten Positioniermittels 26 des Tragrings 16 hinein.

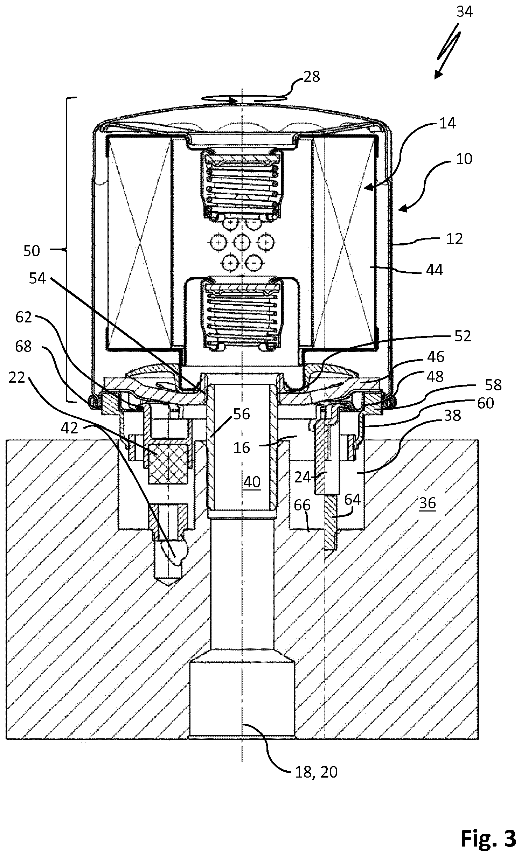

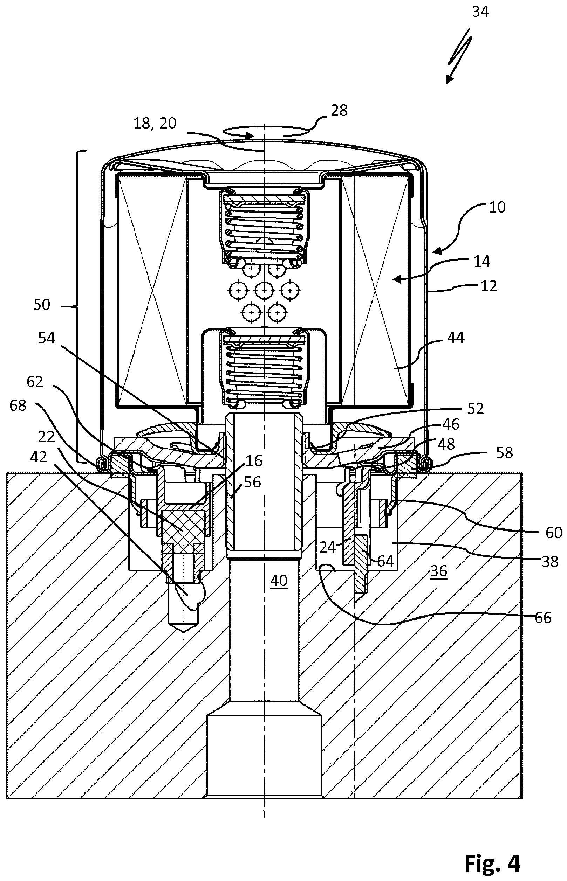

In **Fig. 3** ist das Filtersystem 10 zu einem im Vergleich zu Fig. 2 späteren Montagezeitpunkt gezeigt. Der Filter 10 ist nochmals weiter auf den Anschlussstutzen 56 des Filterkopfs 36 aufgeschraubt. Das erste Positioniermittel 24 des Tragrings 16 hat das Anschlagelement 64 in axialer Richtung beinahe erreicht. Bei einer weiteren Drehung des Filters 10 in Einschraubrichtung 28 wird die erste Positionierhilfe 24 des Tragrings 16 an dem Anschlagelement 64 angeschlagen und dadurch der Tragring 16 in einer vorgegebenen Drehposition relativ zum Filterkopf 36 mit zum Ablaufkanal axial fluchtendem Verschlusselement 22 arretiert. Ein weiteres Mitdrehen des Tragrings 16 mit dem Filter 10 in Einschraubrichtung 28 ist dadurch unterbunden. Durch ein vollständiges Einschrauben des Filters 10 in das Gewinde des Filterkopfs 36 ist mithin nur noch eine alleinige axiale Verstellbewegung des Filters 10 bzw. des Tragrings 16 bewirkt, bis der Filter 10 in seiner in **Fig. 4** gezeigten vorgegebenen Montageposition am Filterkopf 36 angeordnet ist. In der vorgegebenen Montageposition des Filters 10 am Filterkopf 36 ist das Verschlusselement 22 in seinem Dichtsitz am Filterkopf 36 angeordnet. Das Verschlusselement 22 liegt dabei an einem den Leerlaufkanal 42 umfangsseitig begrenzenden Wandbereich des Bodenabschnitts 66 des Filterkopfs 36 in axialer Richtung dichtend an. Das Verschlusselement 22 ist in diesem Fall mithin als ein Axialdichtungselement ausgeführt. Zugleich liegt der Dichtungsring 58 des Gehäuseteils 12 der Wechselfilterkartusche am Filterkopf 36 umlaufend dichtend an.

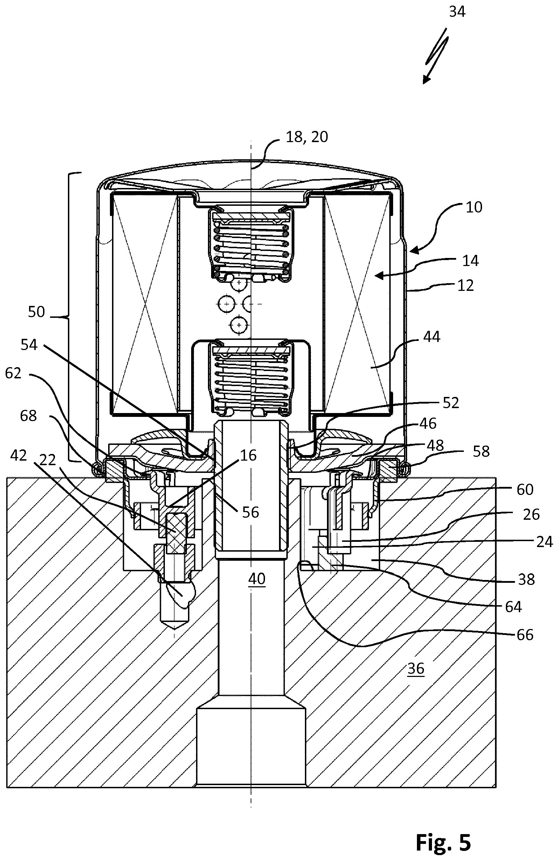

In **Fig. 5** ist ein weiteres Filtersystem 34 gezeigt, das sich von dem vorstehend im Zusammenhang mit den Figuren 2 bis 4 erläuterten Filtersystem 34 im Wesentlichen darin unterscheidet, dass das Verschlusselement 22 als ein in den Leerlaufkanal 42 des Filterkopfs 36 einführbarer Verschlussstopfen ausgebildet ist. Das Verschlusselement 22 ist mithin als ein Radialdichtungselement ausgeführt. Das Verschlusselement 22 besteht vorzugsweise aus einem Elastomer. Zu beachten ist, dass die Schnittdarstellung in Fig. 5 derart gewählt ist, dass auch das zweite Positioniermittel 26 gut zu erkennen ist. Der Filter 10 ist noch in seiner vorgegebenen (betriebsbereiten) Montageposition am Filterkopf 36 angeordnet. Der Verschlussstopfen erstreckt sich in den Leerlaufkanal 42 dichtend hinein. Das zweite Positioniermittel 26 kann in Umfangsrichtung des Tragrings 16 an dem Anschlagelement 64 anliegen. Das Anschlagelement 64 erstreckt sich somit in die zwischen den beiden Positioniermitteln 24, 26 des Tragrings 16 ausgebildete Aufnahme 30 (Fig. 1) hinein.

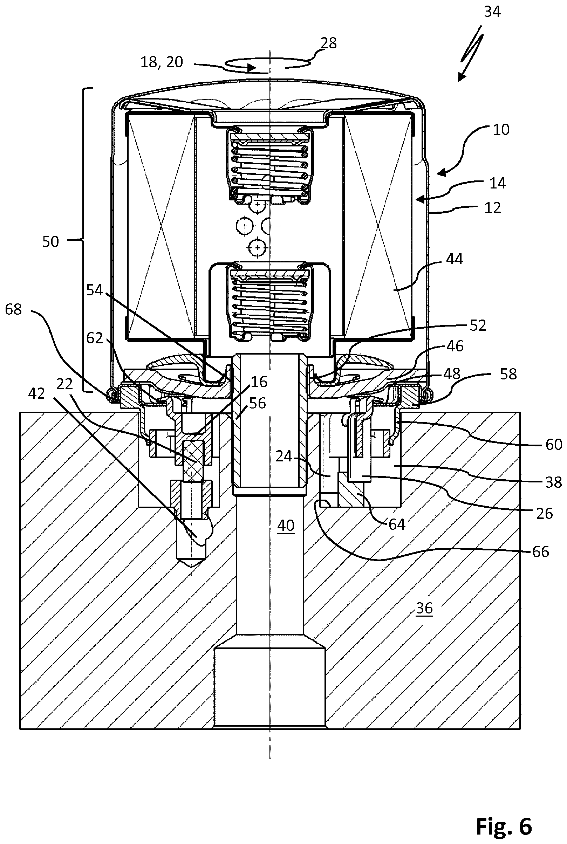

Wird der Filter 10 entgegen der Einschraubrichtung 28 relativ zum Filterkopf 36 um die Längsachse 18 gedreht, um den Filter 10 vom Filterkopf 36 zu lösen, ist durch das zweite Anschlagelement ein Mitdrehen des Tragrings 16 mit dem Gehäuseteil 12 unterbunden. Der Tragring 16 kann mittels einer aus der Aus- oder Abschraubbewegung des Filters abgeleiteten axialen Bewegung des Filters 10 mit seinem Verschlussstopfen aus dem Leerlaufkanal 42 in streng axialer Richtung herausbewegt werden, wie dies in **Fig. 6** beispielhaft gezeigt ist. Eine unerwünschte Querbeanspruchung des Verschlusselements 22 wird dadurch zuverlässig unterbunden. Die Gefahr eines Abreißens von Teilen des Verschlusselements 22 bzw. des gesamten Verschlusselements 22 vom Tragring 16 ist also minimiert.

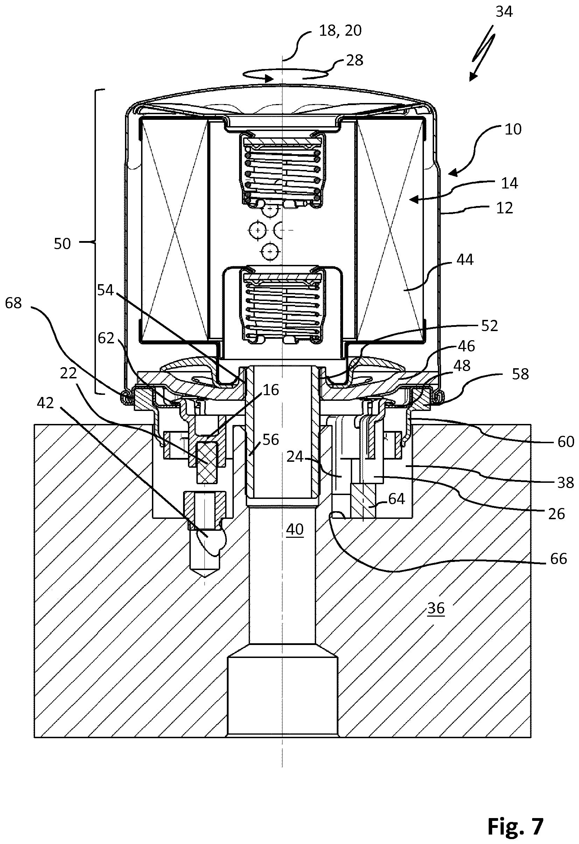

Sobald das kürzere zweite Positioniermittel 26 und das Anschlagelement 64 in Umfangsrichtung des Tragrings 16 einander nicht mehr überdecken, ist ein Mitdrehen des Tragrings 16 mit dem Filter 10 entgegen der Einschraubrichtung 28 ermöglicht. Das zweite Positioniermittel 26 und das Anschlagelement 64 sowie das Verschlusselement 22 und der Leerlaufkanal 42 sind in ihrer räumlichen Anordnung bzw. Bemaßung derart aufeinander abgestimmt, dass eine rotatorische Freigabe des Tragrings 16 entgegen der Einschraubrichtung 28 erst dann ermöglicht ist, wenn das Verschlusselement aus dem Leerlaufkanal in axialer Richtung vollständig ausgerückt ist, wie dies in **Fig. 7** gezeigt ist.

Zu beachten ist, dass der Filter 10 nach einer in der Zeichnung nicht dargestellten Ausführungsform auch als ein herkömmlicher Filtereinsatz (ohne Gehäuseteil 12) ausgeführt sein kann, der in einem ein Gehäuseteil 12 und einen Filterkopf 36 aufweisenden Filtergehäuse austauschbar anordenbar ist. Das Gehäuseteil 12 ist in diesem Fall als Filtergehäusedeckel ausgeführt und dient dem Verschließen des anschaulich als topfförmig ausgeführt beschreibbaren Filterkopfs 36, wobei damit gemeint ist, dass der Filterkopf 36 einen Fluidsammelraum aufweist, der mit dem Ablaufkanal verbunden ist. Das Gehäuseteil 12 ist in ein Gewinde des Filterkopfs 36 einschraubbar. Der Filter 10 ist mit dem Gehäuseteil 12 drehfest verkoppelt, insbesondere mit diesem verrastet oder an diesem reibschlüssig gehalten. Der Filter 10 kann bei dieser Ausführungsform in einer dem in den Figuren 1 bis 7 gezeigten Filterelement 14 entsprechenden Weise ausgeführt sein. Der Tragring 16 kann in diesem Fall an einer Endscheibe oder an einem Stützrohr des Filters 10 rotierbar befestigt sein.

## Patentansprüche

1. Filtersystem (34) für ein zu filterndes Flüssigmedium, insbesondere für Kraftstoff oder für Öl, insbesondere Schmieröl, insbesondere für den Verbrennungsmotor eines Kraftfahrzeugs, umfassend:
- einen Filterkopf (36) mit einem bodenseitigen Leerlaufkanal (42) für das Fluid und mit einem Anschlagelement (64);
- einen als Wechselfilterkartusche ausgebildeten Filter (10), umfassend ein in einem Gehäuse (12) der Wechselfilterkartusche (10) angeordnetes Filterelement (14), wobei die Wechselfilterkartusche (10) mittels einer um ihre Längsachse (18) gerichtete Einschraubbewegung (28) am Filterkopf (36) montierbar ist, wobei die Wechselfilterkartusche (10)
einenends einen Tragring (16) aufweist, der am Gehäuseteil (12), insbesondere am Deckel (46, 48) des Gehäuseteils (12), der Wechselfilterkartusche (10) relativ zur Längsachse (18) der Wechselfilterkartusche (10) rotierbar befestigt ist, wobei
der Tragring (16) ein exzentrisch angeordnetes Verschlusselement (22) für den Leerlaufkanal (42) und ein erstes Positioniermittel (24) aufweist, das mittels der Einschraubbewegung (28) gegen das Anschlagelement (64) des Filterkopfs (36) führbar ist, um den Tragring (16) relativ zum Filterkopf (36) in einer vorgegebenen Drehposition mit zum Leerlaufkanal (42) axial fluchtend angeordnetem Verschlusselement (22) zu positionieren, so dass das Verschlusselement (22) durch eine aus der Einschraubbewegung abgeleitete Axialbewegung des Filters (10) in seinen den Leerlaufkanal (42) verschließenden Dichtsitz am Filterkopf (36) überführbar ist,
**dadurch gekennzeichnet, dass** der Tragring (16) ein zweites Positioniermittel (26) zur Anlage am Anschlagelement (64) aufweist, durch das der Tragring (16) bei einer der Einschraubbewegung (28) entgegen gerichteten Ausschraubbewegung des Filters (10) zum Lösen des Verschlusselements (22) aus seinem Dichtsitz am Filterkopf (36) drehfixiert gehalten ist, so dass das Verschlusselement (22) allein in axialer Richtung aus seinem Dichtsitz herausbewegbar ist, wobei die beiden Positioniermittel (24, 26) stegförmig ausgeführt sind.

2. Filtersystem nach Anspruch 1, **dadurch gekennzeichnet, dass** sich zumindest eines der beiden Positioniermittel (24, 26), bevorzugt beide Positioniermittel (24, 26), in einer radialen Richtung vom Tragring (16) wegerstreckt/wegerstrecken.

3. Filtersystem nach Anspruch 2, wobei die beiden Positioniermittel (24, 26) entweder innerhalb des Tragringumfangs (16) oder außerhalb des Tragringumfangs (16) angeordnet sind.

4. Filtersystem nach Anspruch 2 oder 3, wobei sich das erste Positioniermittel (24) in axialer Richtung über das Verschlusselement (22) hinaus erstreckt.

5. Filtersystem nach einem der vorhergehenden Ansprüche, **dadurch gekennzeichnet, dass** die beiden Positioniermittel (24, 26) am Tragring (16) angeformt sind.

6. Filtersystem nach einem der vorhergehenden Ansprüche, **dadurch gekennzeichnet, dass** das zweite Positioniermittel (26) des Tragrings (16) stirnseitig angeschrägt ist.

7. Filtersystem nach einem der vorhergehenden Ansprüche, **dadurch gekennzeichnet, dass** das Verschlusselement (22) als Radial- und/oder Axialdichtungselement ausgebildet ist oder ein Radial- bzw. Axialdichtungselement aufweist.

8. Filtersystem nach einem der vorhergehenden Ansprüche, **dadurch gekennzeichnet, dass** der Tragring (16) mit dem Filter (10) verhakt ist.

9. Filtersystem nach einem der Ansprüche 1 bis 8, **dadurch gekennzeichnet, dass** der Filterkopf (36) topfförmig ausgebildet ist, wobei der Filterkopf (36) insbesondere einen Fluidsammelraum aufweist und mit einem Ablaufkanal verbunden ist, und der Filter (10) als ein im Filterkopf (36) anordenbarer Filtereinsatz ausgeführt ist.

10. Als Wechselfilterkartusche ausgebildeter Filter (10) für ein Filtersystem (34) nach einem der vorhergehenden Ansprüche, umfassend ein in einem Gehäuse (12) der Wechselfilterkartusche (10) angeordnetes Filterelement (14), wobei die Wechselfilterkartusche (10) mittels einer um ihre Längsachse (18) gerichtete Einschraubbewegung (28) am Filterkopf (36) montierbar ist, wobei die Wechselfilterkartusche (10) einenends einen Tragring (16) aufweist, der am Gehäuseteil (12), insbesondere am Deckel (46, 48) des Gehäuseteils (12), der Wechselfilterkartusche (10) relativ zur Längsachse (18) der Wechselfilterkartusche (10) rotierbar befestigt ist, wobei der Tragring (16) ein exzentrisch angeordnetes Verschlusselement (22) für den Leerlaufkanal (42) und ein erstes stegförmiges Positioniermittel (24) aufweist, das mittels der Einschraubbewegung (28) gegen das Anschlagelement (64) des Filterkopfs (36) führbar ist, um den Tragring (16) relativ zum Filterkopf (36) in einer vorgegebenen Drehposition mit zum Leerlaufkanal (42) axial fluchtend angeordnetem Verschlusselement (22) zu positionieren, so dass das Verschlusselement (22) durch eine aus der Einschraubbewegung abgeleitete Axialbewegung des Filters (10) in seinen den Leerlaufkanal (42) verschließenden Dichtsitz am Filterkopf (36) überführbar ist,
wobei der Tragring (16) ein zweites stegförmiges Positioniermittel (26) aufweist, durch das der Tragring (16) bei einer der Einschraubbewegung (28) entgegengerichteten Ausschraubbewegung des Filters (10) zum Lösen des Verschlusselements (22) aus seinem Dichtsitz am Filterkopf (36) durch Anlage am Anschlagelement (64) drehfixiert gehalten ist, so dass das Verschlusselement (22) allein in axialer Richtung aus seinem Dichtsitz herausbewegbar ist.

11. Filter (10) nach Anspruch 10, **dadurch gekennzeichnet, dass** sich zumindest eines der beiden Positioniermittel (24, 26), bevorzugt beide Positioniermittel (24, 26), in einer radialen Richtung vom Tragring (16) wegerstreckt/wegerstrecken.

12. Filter (10) nach Anspruch 10, wobei die beiden Positioniermittel (24, 26) entweder innerhalb des Umfangs des Tragrings (16) oder außerhalb des Umfangs des Tragrings (16) angeordnet sind.

13. Filter (10) nach Anspruch 11 oder 12, wobei sich das erste Positioniermittel (24) in axialer Richtung über das Verschlusselement (22) hinaus erstreckt.

14. Verfahren zum Einsetzen oder Wechseln eines Filters (10) eines Filtersystems (34) nach einem der Ansprüche 1 bis 9, umfassend die Schritte:
Aufsetzen einer Wechselfilterkartusche (10), umfassend ein in einem Gehäuse (12) der Wechselfilterkartusche (10) angeordnetes Filterelement (14) auf einen Filterkopf (36),
Montieren der Wechselfilterkartusche (10) mittels einer um eine Längsachse (18) gerichteten Einschraubbewegung (28) am Filterkopf (36), wobei der Filter (10) einenends einen Tragring (16) aufweist, der am Gehäuseteil (12), insbesondere am Deckel (46, 48) des Gehäuseteils (12), der Wechselfilterkartusche (10) relativ zur Längsachse (18) der Wechselfilterkartusche (10) rotierbar befestigt ist, wobei der Tragring (16) ein exzentrisch angeordnetes Verschlusselement (22) für den Leerlaufkanal (42) und ein erstes stegförmiges Positioniermittel (24) aufweist, das mittels der Einschraubbewegung (28) gegen das Anschlagelement (64) des Filterkopfs (36) führbar ist,
Positionierung des Tragrings (16) relativ zum Filterkopf (36) in einer vorgegebenen Drehposition mit zum Leerlaufkanal (42) axial fluchtend angeordnetem Verschlusselement (22),
Überführen des Verschlusselements (22) durch eine aus der Einschraubbewegung abgeleitete Axialbewegung der Wechselfilterkartusche (10) in ihren den Leerlaufkanal (42) verschließenden Dichtsitz am Filterkopf (36), wobei der Tragring (16) ein zweites stegförmiges Positioniermittel (26) aufweist, durch das der Tragring (16) bei einer der Einschraubbewegung (28) entgegengerichteten Ausschraubbewegung des Filters (10) zum Lösen des Verschlusselements (22) aus seinem Dichtsitz am Filterkopf (36) am Anschlagelement (64) anliegend drehfixiert gehalten ist, so dass das Verschlusselement (22) allein in axialer Richtung aus seinem Dichtsitz herausbewegbar ist.

## Claims

1. Filter system (34) for a liquid medium to be filtered, in particular for fuel or oil, in particular for lubricating oil, in particular for the internal combustion engine of a motor vehicle, comprising:
- a filter head (36) having a bottom-sided drainage channel (42) for the fluid and having a stop element (64);
- a filter (10) designed as replaceable filter cartridge, comprising a filter element (14) disposed in a housing (12) of the replaceable filter cartridge (10), wherein the replaceable filter cartridge (10) is mountable on the filter head (36) by means of a screwing-in movement (28) oriented around its longitudinal axis (18), wherein the replaceable filter cartridge (10) features at one end a supporting ring (16), which is rotatably attached to the housing component (12), in particular to the cover (46, 48) of the housing component (12), of the replaceable filter cartridge (10) relative to the longitudinal axis (18) of the replaceable filter cartridge (10), wherein
the supporting ring (16) features an eccentrically disposed closure member (22) for the drainage channel (42) and a first positioning means (24), which can be guided against the stop element (64) of the filter head (36) by means of the screwing-in movement (28) in order to position the supporting ring (16) relative to the filter head (36) in a predetermined rotating position with the closure member (22) axially aligned with respect to the drainage channel (42), so that the closure member (22) is transferable by means of an axial movement of the filter (10) derived from the screwing-in movement into its sealing seat on the filter head (36) closing the drainage channel (42),
**characterized in that** the supporting ring (16) features a second positioning means (26) for contacting the stop element (64) by means of which the supporting ring (16) is held in a rotationally fixed manner on the filter head (36) during an unscrewing movement of the filter (10) in the direction opposite to the screwing-in movement (28) for releasing the closure member (22) from its sealing seat, so that the closure member (22) can be moved out alone in the axial direction of its sealing seat, wherein the two positioning means (24, 26) are web-shaped.

2. Filter system according to claim 1, **characterized in that** at least one of both positioning means (24, 26), preferably both positioning means (24, 26), extends away/extend away from the supporting ring (16) in a radial direction.

3. Filter system according to claim 2, wherein both positioning means (24, 26) are disposed either inside the circumference of the supporting ring (16) or outside of the circumference of the supporting ring (16).

4. Filter system according to claim 2 or 3, wherein the first positioning means (24) extends in the axial direction beyond the closure member (22).

5. Filter system according to one of the preceding claims, **characterized in that** both positioning means (24, 26) are molded to the supporting ring (16).

6. Filter system according to one of the preceding claims, **characterized in that** the second positioning means (26) of the supporting ring (16) is chamfered at the front side.

7. Filter system according to one of the preceding claims, **characterized in that** the closing member (22) is designed as radial and/or axial sealing element or features a radial or axial sealing element.

8. Filter system according to one of the preceding claims, **characterized in that** the supporting ring (16) is hooked to the filter (10).

9. Filter system according to one of the claims 1 to 8, **characterized in that** the filter head (36) has a pot-shaped design, wherein the filter head (36) features in particular a fluid collecting chamber and is connected to an outlet conduit, and the filter (10) is designed as filter insert that can be disposed in the filter head (36).

10. Filter (10) designed as replaceable filter cartridge for a filter system (34) according to one of the preceding claims, comprising a filter element (14) disposed in a housing (12) of the replaceable filter cartridge (10), wherein the replaceable filter cartridge (10) is mountable on the filter head (36) by means of a screwing-in movement (28) oriented around its longitudinal axis (18), wherein the replaceable filter cartridge features at one end a supporting ring (16) which is attached rotatably to the housing component (12), in particular to the cover (46, 48) of the housing component (12), of the replaceable filter cartridge (10) relative to the longitudinal axis (18) of the replaceable filter cartridge (10), wherein the supporting ring (16) features an eccentrically disposed closure member (22) for the drainage channel (42) and a first web-shaped positioning means (24), which can be guided against the stop element (64) of the filter head (36) by means of the screwing-in movement (28) in order to position the supporting ring (16) relative to the filter head (36) in a predetermined rotating position with the closure member (22) axially aligned with respect to the drainage channel (42), so that the closure member (22) is transferable by means of an axial movement of the filter (10) derived from the screwing-in movement into its sealing seat on the filter head (36) closing the drainage channel (42), wherein the supporting ring (16) features a second web-shaped positioning means (26) by means of which the supporting ring (16) is held in a rotationally fixed manner on the filter head (36) during an unscrewing movement of the filter (10) in the direction opposite to the screwing-in movement (28) for releasing the closure member (22) from its sealing seat by contacting the stop element (64), so that the closure member (22) can be moved out alone in the axial direction of its sealing seat.

11. Filter (10) according to claim 10, **characterized in that** at least one of both positioning means (24, 26), preferably both positioning means (24, 26), extends away/extend away from the supporting ring (16) in a radial direction.

12. Filter (10) according to claim 10, wherein both positioning means (24, 26) are disposed either inside the circumference of the supporting ring (16) or outside of the circumference of the supporting ring (16).

13. Filter (10) according to claim 11 or 12, wherein the first positioning means (24) extends in the axial direction beyond the closure member (22).

14. Method for inserting or replacing a filter (10) of a filter system (34) according to one of the claims 1 to 9, comprising the steps:
placing a replaceable filter cartridge (10), comprising a filter element (14) disposed in a housing (12) of the replaceable filter cartridge (10), on a filter head (36),
mounting the replaceable filter cartridge (10) on the filter head (36) by means of a screwing-in movement (28) directed around a longitudinal axis (18), wherein the filter (10) features at one end a supporting ring (16) which is attached rotatably to the housing component (12), in particular to the cover (46, 48) of the housing component (12), of the replaceable filter cartridge (10) relative to the longitudinal axis (18) of the replaceable filter cartridge (10), wherein the supporting ring (16) features an eccentrically disposed closure member (22) for the drainage channel (42) and a first web-shaped positioning means (24), which can be guided against the stop element (64) of the filter head (36) by means of the screwing-in movement (28),
positioning the supporting ring (16) relative to the filter head (26) in a predetermined rotating position with the closure member (22) axially aligned with respect to the drainage channel (42),
transferring the closure member (22) by means of an axial movement of the replaceable filter cartridge (10) derived by the screwing-in movement into its sealing seat on the filter head (36) closing the drainage channel (42), wherein the supporting ring (16) features a second web-shaped positioning means (26) by means of which the supporting ring (16) is held in a rotationally fixed manner during an unscrewing movement of the filter (10) in the direction opposite to the screwing-in movement (28) for releasing the closure member (22) from its sealing seat on the filter head (36) by contacting the stop element (64), so that the closure member (22) can be moved out alone in the axial direction of its sealing seat.

## Revendications

1. Système de filtre (34) pour un milieu liquide à filtrer, notamment pour du carburant ou de l'huile, notamment pour de l'huile de lubrification, notamment pour le moteur à combustion interne d'un véhicule automobile, comprenant :
- une tête de filtre (36) ayant un canal de vidange (42) côté fond pour le fluide et ayant un élément de butée (64) ;
- un filtre (10) conçu en tant que cartouche filtrante remplaçable, comprenant un élément filtrant (14) disposé dans un boîtier (12) de la cartouche filtrante remplaçable (10), dans lequel la cartouche filtrante remplaçable (10) peut être montée sur la tête de filtre (36) au moyen d'un mouvement de vissage (28) orienté autour de son axe longitudinal (18), dans lequel la cartouche filtrante remplaçable (10)
présente à une extrémité un anneau porteur (16) qui est attaché de façon rotative sur le composant de boîtier (12), notamment sur le couvercle (46, 48) du composant de boîtier (12), de la cartouche filtrante remplaçable (10) par rapport à l'axe longitudinal (18) de la cartouche filtrante remplaçable (10), dans lequel
l'anneau porteur (16) présente un élément de fermeture (22) disposé de manière excentrique pour le canal de vidange (42) et un premier moyen de positionnement (24) qui peut être guidé au moyen du mouvement de vissage (28) contre l'élément de butée (64) de la tête de filtre (36) afin de positionner l'anneau porteur (16) par rapport à la tête de filtre (36) dans une position de rotation prédéfinie avec l'élément de fermeture (22) aligné axialement par rapport au canal de vidange (42) de sorte que l'élément de fermeture (22) puisse être amené par un mouvement axial du filtre (10) dérivé du mouvement de vissage dans son siège d'étanchéité sur la tête de filtre (36) fermant le canal de vidange (42),
**caractérisé en ce que** l'anneau porteur (16) présente un second moyen de positionnement (26) pour s'appuyer sur l'élément de butée (64) par lequel l'anneau porteur (16) est maintenu dans une position fixe en rotation sur la tête de filtre (36) lors d'un mouvement de dévissage du filtre (10) orienté en sens opposé au mouvement de vissage (28) pour débloquer l'élément de fermeture (22) de son siège d'étanchéité de sorte que l'élément de fermeture (22) soit extractible seul en direction axiale de son siège d'étanchéité, dans lequel les deux moyens de positionnement (24, 26) sont en forme de barrette.

2. Système de filtre selon la revendication 1, **caractérisé en ce qu'**au moins l'un des deux moyens de positionnement (24, 26), de préférence les deux moyens de positionnement (24, 26) s'étend en s'écartant/s'étendent en s'écartant de l'anneau porteur (16) en direction radiale.

3. Système de filtre selon la revendication 2, dans lequel les deux moyens de positionnement (24, 26) sont disposés soit à l'intérieur de la circonférence de l'anneau porteur (16), soit à l'extérieur de la circonférence de l'anneau porteur (16).

4. Système de filtre selon la revendication 2 ou 3, dans lequel le premier moyen de positionnement (24) s'étend en direction axiale au-delà de l'élément de fermeture (22).

5. Système de filtre selon l'une quelconque des revendications précédentes, **caractérisé en ce que** les deux moyens de positionnement (24, 26) sont moulés sur l'anneau porteur (16).

6. Système de filtre selon l'une quelconque des revendications précédentes, **caractérisé en ce que** le second moyen de positionnement (26) de l'anneau porteur (16) est biseauté au niveau de la face frontale.

7. Système de filtre selon l'une quelconque des revendications précédentes, **caractérisé en ce que** l'élément de fermeture (22) est conçu en tant qu'élément d'étanchéité radial et/ou axial ou présente un élément d'étanchéité radial ou axial.

8. Système de filtre selon l'une quelconque des revendications précédentes, **caractérisé en ce que** l'anneau porteur (16) est accroché au filtre (10).

9. Système de filtre selon l'une quelconque des revendications 1 à 8, **caractérisé en ce que** la tête de filtre (36) est conçue en forme de pot, dans lequel la tête de filtre (36) présente notamment une chambre collectrice pour des fluides et est reliée à un canal d'évacuation, et le filtre (10) est conçu en tant que cartouche filtrante pouvant être disposée dans la tête de filtre (36).

10. Filtre (10) conçu en tant que cartouche filtrante remplaçable pour un système de filtre (34) selon l'une quelconque des revendications précédentes, comprenant un élément filtrant (14) disposé dans un boîtier (12) de la cartouche filtrante remplaçable (10), dans lequel la cartouche filtrante remplaçable (10) peut être montée sur la tête de filtre (36) au moyen d'un mouvement de vissage (28) orienté autour de son axe longitudinal (18), dans lequel la cartouche filtrante remplaçable présente à une extrémité un anneau porteur (16) qui est attaché de façon rotative sur le composant de boîtier (12), notamment sur le couvercle (46, 48) du composant de boîtier (12), de la cartouche filtrante remplaçable (10) par rapport à l'axe longitudinal (18) de la cartouche filtrante remplaçable (10), dans lequel l'anneau porteur (16) présente un élément de fermeture (22) disposé de manière excentrique pour le canal de vidange (42) et un premier moyen de positionnement (24) en forme de barrette qui peut être guidé au moyen du mouvement de vissage (28) contre l'élément de butée (64) de la tête de filtre (36) afin de positionner l'anneau porteur (16) par rapport à la tête de filtre (36) dans une position de rotation prédéfinie avec l'élément de fermeture (22) aligné axialement par rapport au canal de vidange (42) de sorte que l'élément de fermeture (22) puisse être amené par un mouvement axial du filtre (10) dérivé du mouvement de vissage dans son siège d'étanchéité sur la tête de filtre (36) fermant le canal de vidange (42),
dans lequel l'anneau porteur (16) présente un second moyen de positionnement (26) en forme de barrette par lequel l'anneau porteur (16) est maintenu dans une position fixe en rotation sur la tête de filtre (36) lors d'un mouvement de dévissage du filtre (10) orienté en sens opposé au mouvement de vissage (28) pour débloquer l'élément de fermeture (22) de son siège d'étanchéité en s'appuyant sur l'élément de butée (64) de sorte que l'élément de fermeture (22) soit extractible seul en direction axiale de son siège d'étanchéité.

11. Filtre (10) selon la revendication 10, **caractérisé en ce qu'**au moins l'un des deux moyens de positionnement (24, 26), de préférence les deux moyens de positionnement (24, 26) s'étend en s'écartant/s'étendent en s'écartant de l'anneau porteur (16) en direction radiale.

12. Filtre (10) selon la revendication 10, dans lequel les deux moyens de positionnement (24, 26) sont disposés soit à l'intérieur de la circonférence de l'anneau porteur (16), soit à l'extérieur de la circonférence de l'anneau porteur (16).

13. Filtre (10) selon la revendication 11 ou 12, dans lequel le premier moyen de positionnement (24) s'étend en direction axiale au-delà de l'élément de fermeture (22).

14. Procédé pour insérer ou remplacer un filtre (10) d'un système de filtre (34) selon l'une quelconque des revendications 1 à 9, comprenant les étapes :
placer une cartouche filtrante remplaçable (10), comprenant un élément filtrant (14) disposé dans un boîtier (12) de la cartouche filtrante remplaçable (10), sur une tête de filtre (36),
monter la cartouche filtrante remplaçable (10) sur la tête de filtre (36) au moyen d'un mouvement de vissage (28) autour d'un axe longitudinal (18), dans lequel le filtre (10) présente à une extrémité un anneau porteur (16) qui est attaché de façon rotative sur le composant de boîtier (12), notamment sur le couvercle (46, 48) du composant de boîtier (12), de la cartouche filtrante remplaçable (10) par rapport à l'axe longitudinal (18) de la cartouche filtrante remplaçable (10), dans lequel l'anneau porteur (16) présente un élément de fermeture (22) disposé de manière excentrique pour le canal de vidange (42) et un premier moyen de positionnement (24) en forme de barrette qui peut être guidé au moyen du mouvement de vissage (28) contre l'élément de butée (64) de la tête de filtre (36),
positionner l'anneau porteur (16) par rapport à la tête de filtre (36) dans une position de rotation prédéfinie avec l'élément de fermeture (22) aligné axialement par rapport au canal de vidange (42),
transférer l'élément de fermeture (22) au moyen d'un mouvement axial de la cartouche filtrante remplaçable (10) dérivé du mouvement de vissage dans son siège d'étanchéité sur la tête de filtre (36) fermant le canal de vidange (42), dans lequel l'anneau porteur (16) présente un second moyen de positionnement (26) en forme de barrette par lequel l'anneau porteur (16) est maintenu dans une position fixe en rotation lors d'un mouvement de dévissage du filtre (10) orienté en sens opposé au mouvement de vissage (28) pour débloquer l'élément de fermeture (22) de son siège d'étanchéité sur la tête de filtre (36) en s'appuyant sur l'élément de butée (64) de sorte que l'élément de fermeture (22) soit extractible seul en direction axiale de son siège d'étanchéité.
